# EUROPÄISCHE PATENTSCHRIFT

(11) **EP 4 247 294 B1**
(45) Veröffentlichungstag und Bekanntmachung des Hinweises auf die Patenterteilung: **18.06.2025**
(21) Anmeldenummer: 21835158.3
(22) Anmeldetag: 15.11.2021
(51) Int. Cl.: A61C 8/00

(54) **KIEFERIMPLANTAT**
JAW IMPLANT
IMPLANT DE MÂCHOIRE

(30) Priorität: 17.11.2020 DE 102020130333
(43) Veröffentlichungstag der Anmeldung: 27.09.2023
(73) Patentinhaber: BRINKMEIER, Joachim, 79249 Merzhausen (DE)
(72) Erfinder: BRINKMEIER, Joachim, 79249 Merzhausen (DE)
(74) Vertreter: Mertzlufft-Paufler, Cornelius
(86) Internationale Anmeldenummer: PCT/EP2021/081713
(87) Internationale Veröffentlichungsnummer: WO 2022/106364

(56) Entgegenhaltungen:
- WO-A1-2016/198935
- WO-A1-2016/201580
- DE-B- 1 075 791
- US-A1- 2010 069 973

## Beschreibung

Die Erfindung betrifft ein Kieferimplantat mit zumindest einer etwa U-förmigen Lochleiste, die voneinander beabstandete Befestigungslöcher trägt.

Aus der DE 10 2015 122 800 B3 kennt man bereits ein Kieferimplantat mit einer Trägerstruktur, die wenigstens einen knochenaußenstrukturfolgenden Befestigungsabschnitt hat, der an einem Kieferknochen festgeschraubt werden kann. An dem Befestigungsabschnitt steht zumindest ein Sockel weit vor, der zum Aufnehmen einer Prothese direkt oder unter Verwendung eines auch als Abutment bezeichneten Zwischenteiles bestimmt ist. Da das vorbekannte Kieferimplantat mit seinen am Befestigungsabschnitt weit vorstehenden Sockeln eine dreidimensionale Struktur darstellt, ist eine individuelle Herstellung und Anpassung des vorbekannten Kieferimplantats für jeden einzelnen Patienten notwendig. Dazu wird das vorbekannte Kieferimplantat in einem Verfahren hergestellt, das in einem ersten Verfahrensschritt das Erfassen individueller Patientendaten beispielsweise hinsichtlich der Knochen- und Weichteilkonfiguration des Patienten sowie der jeweiligen Außenkontur im Bereich des Kiefers mit Hilfe eines MRTs oder CTs vorsieht, bevor vorzugsweise unter Nutzung einer Laser-Sinterfertigung die Trägerstruktur mit den vorstehenden Sockeln auf Basis dieser individuellen Patientendaten mittels CAD- oder CAM-Technik hergestellt wird.

Die WO 2016/198935 A1 beschreibt ein Kieferimplantat zur oralen, subperiostalen Platzierung über dem Alveolarkamm des Oberkiefers oder des Unterkiefers, wobei das Implantat einen Körper bildet, der im Querschnitt in dem Zustand, in dem er auf dem Alveolarkamm quer zum Alveolarkamm platziert wurde, konkav zum Alveolarkamm hin geformt ist, wie z. B. J-förmig, L-förmig oder U-förmig, wobei in oder in der Nähe eines ersten Abschnitts, der die Basis des Körpers bildet, insbesondere die Basis des J, L oder U bildet, der Körper mit einem oder mehreren Stützbereichen für Stützelemente, wie z.B. Säulen, versehen ist, um sich durch die Gingiva zu erstrecken, wobei die Stützbereiche einstückig mit dem Körper ausgebildet sind, wobei die Stützelemente eine Stütze für eine Exo-Prothese, wie z.B. eine Zahnprothese oder ein Gebiss, bilden, wobei die Stützbereiche mit dem Rest des Körpers über relativ geschwächte Bereiche des Körpers verbunden sind, insbesondere mit dem Rest des Körpers nur über diese relativ geschwächten Bereiche des Körpers verbunden sind.

US 2010/069973 A1 offenbart eine Knochenplatte mit einer ersten U-förmigen Lochleiste und einer zweiten Lochleiste, die mit der ersten Lochleiste über Verbindungsstege verbunden ist, wobei die erste Lochleiste sockel-, zapfen- und hülsenfrei ausgebildet ist.

Da das aus DE 10 2015 122 800 B3 vorbekannte Kieferimplantat ein personenspezifisches Implantat darstellt, das erst aufwändig hergestellt werden muss, beinhaltet die Verwendung des aus DE 10 2015 122 800 B3 vorbekannten Standes der Technik eine erhebliche Einschränkung für den Patienten. Der Patient, der häufig älter ist, krank ist oder unter einem Tumor leidet, muss sich zunächst mit einem Provisorium behelfen, das nicht belastet werden darf, während das gemäß der 10 2015 122 800 B3 hergestellte Implantat ihm erst zu einem späteren Zeitpunkt zur Verfügung steht. Da insbesondere für den kranken Menschen die noch verbleibende Lebenszeit knapp sein kann, stellt diese Vorgehensweise bei dem vorbekannten Implantat eine erhebliche Einschränkung für den Patienten dar.

Es besteht daher die Aufgabe, ein Kieferimplantat zu schaffen, mit dem sich ein im Bereich der Zähne und gegebenenfalls auch des Kieferknochens wenigstens eine Lücke aufweisender Ober- oder Unterkiefer behandeln lässt, wobei das erfindungsgemäße Kieferimplantat eine rasche und kurzfristige Behandlung ermöglichen soll, welche die Belastbarkeit des Kiefers unmittelbar nach der Behandlung wiederherstellt. Es besteht auch die Aufgabe, eine Behandlung zu schaffen, die mit Hilfe eines solchen Kieferimplantats dafür sorgt, dass die Funktion des Kiefers und dessen Belastbarkeit nach der Behandlung rasch wiederhergestellt werden kann. Dabei soll sich das erfindungsgemäße Kieferimplantat sowie das dazugehörige Behandlungsverfahren für behandlungsbedürftige Menschen und Tiere in gleicher Weise eignen.

Die erfindungsgemäße Lösung dieser Aufgabe besteht in den Merkmalen des geltenden Patentanspruchs 1.

Das erfindungsgemäße Kieferimplantat weist zumindest eine U-förmige Lochleiste auf, die voneinander beabstandete Befestigungslöcher trägt, welche zur Montage des Kieferimplantats am Kieferknochen des Patienten und zusätzlich oder stattdessen zur Befestigung eines Zahnersatzes vorgesehen sind. Dabei sind im Abstand zwischen benachbarten Befestigungslöchern Querschnittsschwächungen vorgesehen, die eine knochenaußenstrukturfolgende Verformung und Formanpassung der zumindest einen Lochleiste erleichtern und auch zum Ablängen der zumindest einen Lochleiste bestimmt sind. Da die Lochleiste bei Bedarf an den Querschnittsschwächungen abgelängt werden kann, lässt sich das erfindungsgemäße Kieferimplantat serienmäßig oder gar industriell in großen Stückzahlen herstellen und anschließend während auch nur eines Behandlungstermins an die individuellen Gegebenheiten im Bereich des zu behandelnden Kiefers anpassen. Während die an den freien Endbereichen der etwa U-förmigen Lochleiste vorgesehenen Befestigungslöcher nur zum Fixieren und Festschrauben des Kieferimplantats am Kieferknochen vorgesehen sein können, weist die Lochleiste in einem mit Abstand von den freien Enden dieser Lochleiste angeordneten Teilbereich im Bereich eines jeden, ein Innengewinde aufweisenden Befestigungsloches eine die Längserstreckung dieses Befestigungsloches erhöhende Querschnittsverdickung auf. Durch diese Querschnittsverdickungen im Bereich des den Zahnersatz tragenden Teilbereiches der Lochleiste lässt sich der Zahnersatz fest und belastbar an der Lochleiste festschrauben, ohne dass vorstehende Befestigungssockel, -zapfen oder -hülsen notwendig wären.

Erfindungsgemäß bildet die zumindest eine Lochleiste eine innenliegende erste Lochleiste, die zumindest auf einer Seite und vorzugsweise beidseits über Verbindungsstege mit mindestens einer außenliegenden zweiten Lochleiste verbunden ist. Dadurch lässt sich die zumindest eine Lochleiste bei Bedarf leicht an den taillenförmigen Querschnittsschwächungen verformen und/oder ablängen.

Dabei kann das erfindungsgemäße Kieferimplantat eine einzige, ebenfalls U-förmige zweite Lochleiste haben, welche die innenliegende erste Lochleiste begrenzt und mit dieser über Verbindungsstege verbunden ist. Bevorzugt wird jedoch eine Ausführungsform, bei der die innenliegende erste Lochleiste beidseits mit jeweils einer außenliegenden zweiten Lochleiste verbunden ist.

Eine bevorzugte Weiterbildung, bei der sich die erste und/oder die zweite Lochleiste bei Bedarf leicht an den taillenförmigen Querschnittsschwächungen verformen und/oder ablängen lässt, sieht vor, dass die erste und/oder die zweite Lochleiste eine gliederkettenförmige Außenkontur mit jeweils einer, im Bereich eines jeden Befestigungsloches angeordneten, vorzugsweise gerundeten Ausformung sowie einer taillenförmigen und als Querschnittsschwächung ausgebildeten Einformung zwischen benachbarten Befestigungslöchern aufweist.

Damit der Zahnersatz drehfest an dem im Bereich einer Querschnittsverdickung vorgesehenen Befestigungsloch montiert werden kann, ist es vorteilhaft, wenn die Querschnittsverdickungen eine unrunde Außenkontur aufweist. Dabei wird eine Ausführung bevorzugt, bei der zumindest eine Querschnittsverdickung als eine einseitig oder doppelseitig vorgesehene Materialverdickung der ersten innenliegenden Lochleiste ausgestaltet ist, welche Materialverdickung eine vorzugsweise kreissegmentförmige Außenkontur mit auf gegenüberliegenden Seiten zu benachbarten Querschnittsverdickungen hin angeordneten Außenlinien oder Kreissehnen aufweist.

Erfindungsgemäß ist die erste Lochleiste sockel-, zapfen- und hülsenfrei ausgebildet. Dadurch kann das erfindungsgemäße Kieferimplantat auf einfache Weise hersgestellt und während einer Behandlung leicht an die individuellen Gegebenheiten eines Patienten angepasst werden. Eine besonders vorteilhafte Weiterbildung gemäß der Erfindung sieht vor, dass die erste und/oder die zweite Lochleiste in einem mittleren Bereich ihrer Längserstreckung einen reduzierten Leistenquerschnitt aufweist und in Richtung zu ihren freien Endbereichen einen demgegenüber verdickten oder vergrößerten Leistenquerschnitt hat. Durch diesen, auch hundeknochenförmigen Leistenquerschnitt wird erreicht, dass die Lochleisten des erfindungsgemäßen Kieferimplantats nur im Bereich der freien Leistenenden am Kiefer des Patienten anliegen, während demgegenüber die übrigen und insbesondre die mittleren Teilbereiche des Kiefers weniger stark belastet werden, die damit weiterhin ausreichend durchblutet sind.

Um die zur Befestigung des Kieferimplantats auf den Kiefer mittels der Befestigungsschrauben aufgebrachte Kraft dosieren zu können, und um eine überstarke Befestigung des Kieferimplantats am Kiefer zu vermeiden, ist es vorteilhaft, wenn auch die an den freien Endbereichen der ersten Lochleiste vorgesehenen und zur Befestigung der ersten Lochleiste am Kiefer bestimmten Befestigungslöcher ein Innengewinde tragen. Die Herstellung des erfindungsgemäßen Kieferimplantats und dessen Anpassung an die individuellen Gegebenheiten eines Patienten wird begünstigt, wenn die zweite(n) Lochleiste(n) an die Form der U-förmigen innenliegenden ersten Lochleiste angepasst ist/sind.

Um bei Bedarf auch nur die erste innenliegende Lochleiste des erfindungsgemäßen Kieferimplantats verwenden oder nur mit der auf einer der beiden Längsseiten der ersten innenliegenden Lochleiste verbundenen zweiten Lochleiste befestigen zu können, ist es vorteilhaft, wenn das Kieferimplantat im Bereich seiner Verbindungsstege ablängbar und/oder verformbar ausgestaltet ist.

Dabei sieht eine Ausführungsform gemäß der Erfindung vor, dass das Kieferimplantat im Bereich seiner Verbindungsstege derart verformbar ausgestaltet ist, dass die innenliegende erste Lochleiste auf den Kieferkamm montierbar ist, während die außenliegende(n) zweite(n) Lochleiste(n) an der benachbarten Außenflanke des Kiefers befestigbar ist/sind. Das erfindungsgemäße Kieferimplantat lässt sich auf einfache Weise aus Metall oder jedem anderen geeigneten Werkstoff herstellen. Vorteilhaft kann es sein, wenn das Kieferimplantat aus einem vorzugsweise verstärkten und insbesondere faserverstärkten Kunststoff hergestellt ist.

Die Offenbarung betrifft auch ein Verfahren (nicht beansprucht) zur Behandlung eines im Bereich der Zähne und gegebenenfalls auch des Kieferknochens wenigstens eine Lücke aufweisenden Kiefers mit Hilfe eines Kieferimplantat der eingangs erwähnten Art, welches Kieferimplantats auf einen, an die wenigstens eine Lücke angepassten Teilbereich der zumindest einen Lochleiste abgelängt und/oder separiert wird, wobei auf dem die wenigstens eine Lücke überbrückenden Teilbereich in einem nachfolgenden Verfahrensschritt der Zahnersatz montiert wird.

Weiterbildungen gemäß der Erfindung ergeben sich aus der nachfolgenden Beschreibung bevorzugter Ausführungsbeispiele in Verbindung mit den Ansprüchen sowie der Zeichnung. Nachstehend wird die Erfindung anhand bevorzugter Ausführungsbeispiele noch näher beschrieben.

Es zeigt:
- Fig. 1: ein in einer Draufsicht dargestelltes und fabrikseitig vorgefertigtes Kieferimplantat, das eine innenliegende erste Lochleiste zur Befestigung von Zahnersatz sowie an beiden Längsseiten jeweils eine zweite außenliegende Lochleiste aufweist, wobei die erste Lochleiste mit den zweiten Lochleisten jeweils über verformbare und/oder ablängbare Verbindungsstege verbunden ist,
- Fig. 2: das Kieferimplantat aus Figur 1 in einer Seitenansicht,
- Fig. 3: das Kieferimplantat aus den Figuren 1 und 2 in einer Unteransicht,
- Fig. 4: das bereits in den Figuren 1 bis 3 dargestellte Kieferimplantat in einem, an einen individuellen Kiefer abgelängten und daran formangepassten Zustand,
- Fig. 5: das Kieferimplantat aus Figur 1 bis 3 in einem an die individuellen Gegebenheiten eines Kiefers formangepassten Zustand, wobei der Kiefer halbseitig eine Lücke in der Zahnleiste und im Kieferknochen aufweist, die mit Hilfe eines entsprechend abgelängten Teilstückes des Kieferimplantats überbrückt und mit hier nicht weiter dargestelltem Zahnersatz ergänzt werden kann,
- Fig. 6: das Kieferimplantat aus den Figuren 1 bis 3 in einer perspektivischen Darstellung, wobei durch einzelne kurze Striche angedeutet ist, wie und wo das fabrikseitig vorgefertigte Kieferimplantat zur Anpassung an einen bestimmten Kiefer abgelängt werden kann,
- Fig. 7: einen aus dem vorgefertigten Kieferimplantat gemäß den Figuren 1 bis 3 abgelängten Teilabschnitt der innenliegenden ersten Lochleiste,
- Fig. 8: einen weiteren, aus dem auch in großen Stückzahlen vorgefertigten Kieferimplantat gemäß den Figuren 1 bis 3 abgelängten Teilbereich der innenliegenden ersten Lochleiste in einer perspektivischen Darstellung,
- Fig. 9: einen aus dem vorgefertigten Kieferimplantat gemäß den Figuren 1 bis 3 hergestellten und bereits an den Kiefer eines Patienten formangepassten Teilbereich, der hier eine Lücke im Kieferknochen überbrückt, wobei an dem entsprechenden Abschnitt der innenliegenden ersten Lochleiste der erforderliche Zahnersatz befestigt werden kann,
- Fig. 10: das Kieferimplantat aus den Figuren 1 bis 3, wobei durch gestrichelte Schnittlinien und gerundete Pfeile dargestellt ist, wie die Lochleisten dieses Kieferimplantats an die individuellen Gegebenheiten eines Patienten angepasst und verformbar sind,
- Fig. 11: ein aus dem vorgefertigten Kieferimplantat gemäß den Figuren 1 bis 3 abgelängtes Teilstück aus innenliegender erster Lochleiste und einer der außenliegenden zweiten Lochleisten,
- Fig. 12: das an eine Lücke im Kieferknochen formangepasste Teilstück aus Figur 11 in einer perspektivischen Darstellung mit Blick von unten, und
- Fig. 13: das Teilstück aus den Figuren 11 und 12 in einem am Kiefer fixierten Zustand.

Das hier dargestellte Kieferimplantat 1 weist eine innenliegende erste Lochleiste 2 auf, die etwa U-förmig ausgebildet ist. Die Lochleiste 2 hat voneinander beabstandete Befestigungslöcher 3, die zur Montage des Kieferimplantats 1 am Kieferknochen des Patienten und zusätzlich oder stattdessen zur Befestigung eines Zahnersatzes vorgesehen sind. Dabei sind im Abstand zwischen benachbarten Befestigungslöchern 3 Querschnittsschwächungen 4 vorgesehen, die eine knochenaußenstrukturfolgende Verformung und Formanpassung der innenliegenden ersten Lochleiste 2 erleichtern und auch zum Ablängen dieser Lochleiste 2 bestimmt sind. Da die Lochleiste 2 bei Bedarf an den Querschnittsschwächungen 4 abgelängt werden kann, lässt sich das Kieferimplantat 1 serienmäßig oder gar industriell in großen Stückzahlen herstellen und anschließend während auch nur eines Behandlungstermins an die individuellen Gegebenheiten im Bereich des zu behandelnden Kiefers 5 anpassen. Während die an den freien Endbereichen 6, 7 der etwa U-förmigen innenliegenden Lochleiste 2 vorgesehenen Befestigungslöcher 3 nur zum Fixieren und Festschrauben des Kieferimplantats 1 am Kieferknochen vorgesehen sein können, weist die innenliegende erste Lochleiste 2 in einem mit Abstand von den freien Enden **6,** 7 dieser Lochleiste 2 angeordneten Teilbereich 8 im Bereich eines jeden, ein Innengewinde zum Befestigen eines Zahnersatzes aufweisenden Befestigungsloches 3 eine die Längserstreckung dieses Befestigungsloches 3 erhöhende Querschnittsverdickung 9 auf.

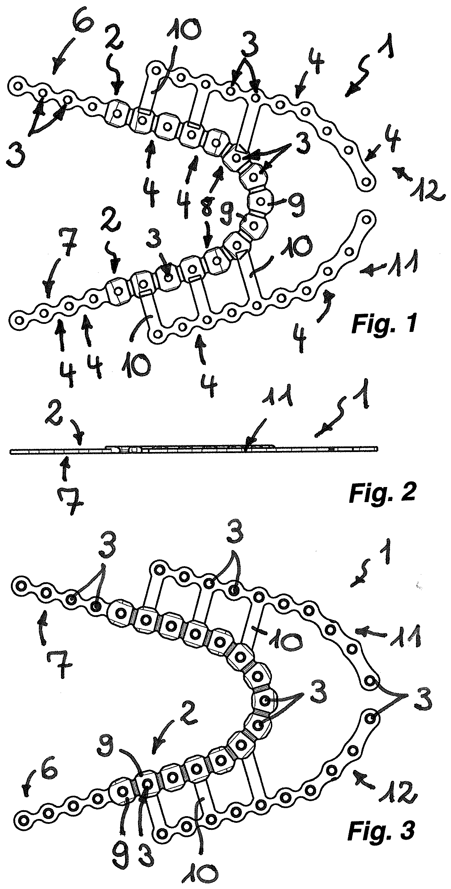

Wie aus einem Vergleich der Figuren 1 bis 3 deutlich wird, ist die innenliegende erste Lochleiste 2 beidseits über Verbindungsstege 10 mit jeweils einer außenliegenden zweiten Lochleiste 11, 12 verbunden. Die erste Lochleiste 2 und die zweiten Lochleisten 11, 12 weisen eine gliederkettenförmige Außenkontur mit jeweils einer, im Bereich eines jeden Befestigungsloches 3 gerundeten Ausformung sowie einer taillenförmigen und als Querschnittsschwächung 4 ausgebildeten Einformung zwischen benachbarten Befestigungslöchern 3 auf.

In den Figuren 1 und 3 ist erkennbar, dass die Querschnittsverdickungen 9 eine unrunde Außenkontur aufweisen, so dass ein an diesen Querschnittsverdickungen 9 angeschraubter Zahnersatz daran auf einfache Weise drehfest montiert werden kann.

Aus einem Vergleich der Figuren 1 und 3, welche die Ober- und die Unterseite des vorgefertigten Kieferimplantats 1 zeigen, ist erkennbar, dass die Querschnittsverdickungen 9 jeweils als eine doppelseitig vorgesehene Materialverdickung der innenliegenden ersten Lochleiste 2 ausgebildet sind, welche Materialverdickungen eine vorzugsweise kreissegmentförmige Außenkontur mit auf gegenüberliegenden Seiten zu benachbarten Querschnittsverdickungen hin angeordneten Außenlinien oder Kreissehnen haben. Aus der Seitenansicht in Figur 2 ist erkennbar, dass das Kieferimplantat und dessen erste sowie zweite Lochleiste insbesondere im Bereich der Querschnittsverdickungen 9 sockel-, zapfen- oder hülsenfrei ausgebildet sind. Des Weiteren wird aus den Figuren 1 und 3 deutlich, dass das vorgefertigte Kieferimplantat 1 ober- und unterseitig gleich ausgebildet ist und somit sowohl mit der Unterseite als auch wahlweise mit der Oberseite am Kiefer 5 angelegt und dort fixiert werden kann.

In Figur 2 ist nicht dargestellt, dass die erste Lochleiste 2 und/oder die zweiten Lochleisten 11, 12 in einem mittleren Bereich der Längserstreckung einen reduzierten Leistenquerschnitt aufweisen und in Richtung zu ihren freien Endbereichen einen demgegenüber verdickten oder vergrößerten Leistenquerschnitt haben können. Durch einen derartigen hundeknochenförmigen Leistenquerschnitt liegt die innenliegende erste Lochleiste 2 und/oder die außenliegende(n) zweite(n) Lochleiste(n) 11, 12 nur mit den äußeren Randbereichen dieser Querschnittsform am Kiefer 5 an, wodurch unterhalb der Lochleisten 2, 11, 12 Teilbereiche des Kiefers 5 weniger stark belastet werden, die weiterhin ausreichend durchblutet sind. In den Figuren 1 und 3 ist angedeutet, dass auch die an den freien Endbereichen 6, 7 der ersten Lochleiste 2 vorgesehenen und zur Befestigung der Lochleiste 2 am Kiefer 5 bestimmten Befestigungslöcher 3 ein Innengewinde tragen. Des Weiteren ist auch in jedem der, an einer der zweiten Lochleisten 11, 12 vorgesehenen Befestigungslöchern 3 ein solches Innengewinde vorgesehen.

Wie aus den Figuren 1 bis 3 erkennbar ist, sind die zweiten Lochleisten 11, 12 an die Form der U-förmigen innenliegenden ersten Lochleiste 2 formangepasst und weisen in Längserstreckung ebenfalls eine gerundete Form auf. Dabei ist das Kieferimplantat 1 im Bereich seiner Verbindungsstege 10 ablängbar und verformbar ausgestaltet.

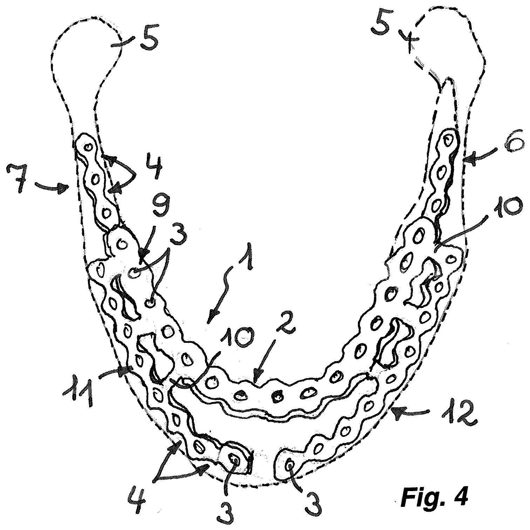

Aus einer zusammenschauenden Betrachtung der Figuren 4, 5, 9 und 12 wird deutlich, dass das Kieferimplantat 1 im Bereich seiner Verbindungsstege 10 derart verformbar ausgestaltet ist, dass die innenliegende erste Lochleiste 2 auf dem Kieferkamm montierbar ist, während die außenliegende(n) zweite(n) Lochleiste(n) 11, 12 an den Außenflanken des Kiefers 5 befestigbar ist/sind.

In Figur 4 ist gezeigt, dass das auch in großen Stückzahlen vorgefertigte Kieferimplantat 1 gemäß den Figuren 1 bis 3 derart verformt werden kann, dass seine erste innenliegende Lochleiste 2 auf dem Kieferkamm des zu behandelnden Kiefers 5 fixiert wird, während demgegenüber die über die nach unten abgewinkelten Verbindungsstege 10 verbundenen zweiten Lochleisten 11, 12 an den Außenflanken des Kiefers 5 befestigt werden können. Dabei kann an den durch entsprechende Querschnittsverdickungen 9 verstärkten Befestigungslöchern 3 der innenliegenden ersten Lochleiste 2 der erforderliche Zahnersatz verschraubt werden. Zumindest einzelne der im Bereich solcher Querschnittsverdickungen 9 vorgesehenen Befestigungslöcher 3 sind auch zur Befestigung der innenliegenden ersten Lochleiste 2 am Kamm des Kiefers 5 verwendbar, wenn durch diese Befestigungslöcher 3 entsprechende Befestigungsschrauben in den Kieferknochen eingeschraubt werden.

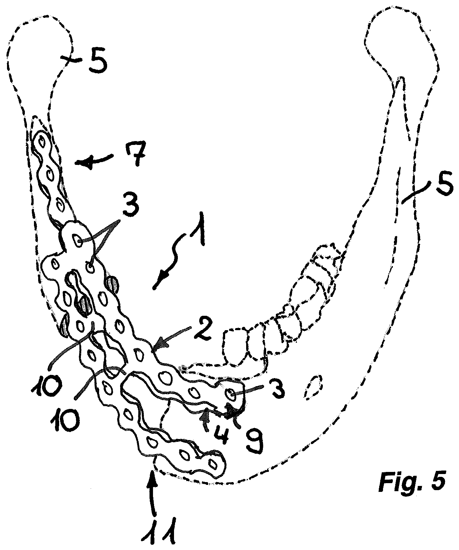

In Figur 5 ist dargestellt, dass das in den Figuren 1 bis 3 gezeigte vorgefertigte Kieferimplantat 1 auch entlang seiner Längsmittelachse derart gekürzt werden kann, dass die hälftige innenliegende erste Lochleiste 2 auf der entsprechenden Hälfte des Kieferkammes des zu behandelnden Kiefers 5 befestigt werden kann, während demgegenüber die mit dieser Lochleisten-Hälfte über die Verbindungsstege 10 verbundene zweite Lochleiste 11 an der benachbarten Außenflanke des Kiefers 5 festgeschraubt wird. Auch hier können die im Bereich der Querschnittsverdickungen 9 vorgesehenen Befestigungslöcher 3 den erforderlichen Zahnersatz tragen.

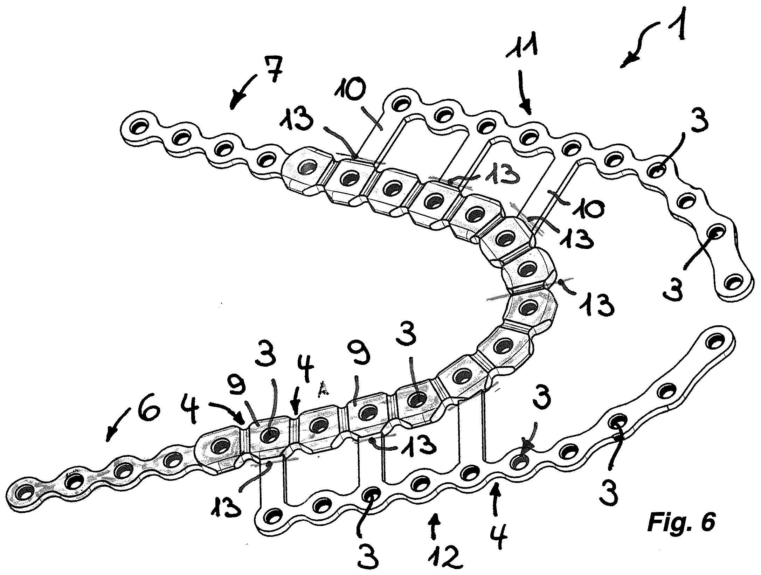

In Figur 6 ist durch kurze Schnittlinien 13 angedeutet, wie das in den Figuren 1 bis 3 vorgefertigte Kieferimplantat 1 zu dem in Figur 5 an die individuellen Verhältnisse im Kiefer des Patienten abgelängten und angepassten Zustand gekürzt und verformt werden kann.

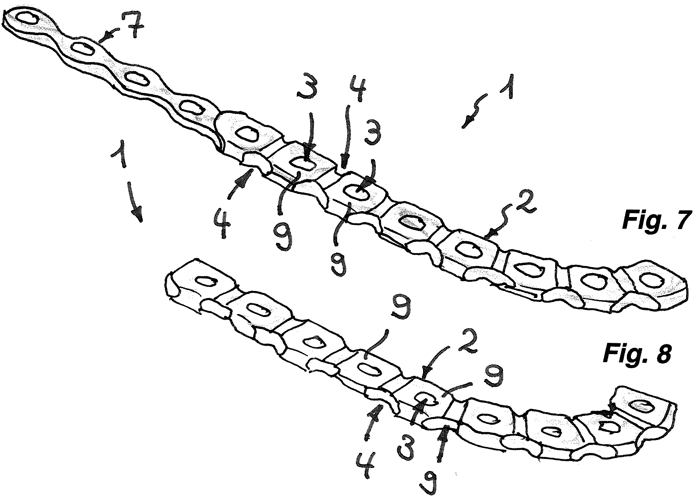

In den Figuren 7 und 8 ist angedeutet, dass die innenliegende erste Lochleiste 2 des in den Figuren 1 bis 3 gezeigten vorgefertigten Kieferimplantates 1 auch separiert werden kann, um ein entsprechendes Teilstück dieser innenliegenden ersten Lochleiste 2 zur Montage von Zahnersatz zu verwenden. Dabei können auch zumindest einzelne der im Bereich der Querschnittsverdickungen 9 vorgesehenen Befestigungslöcher 3 von nicht weiter dargestellten Befestigungsschrauben durchsetzt werden, die mit ihrem über das entsprechende Teilstück der Lochleiste 2 überstehende Gewindeschaft im Kieferknochen verankert sind.

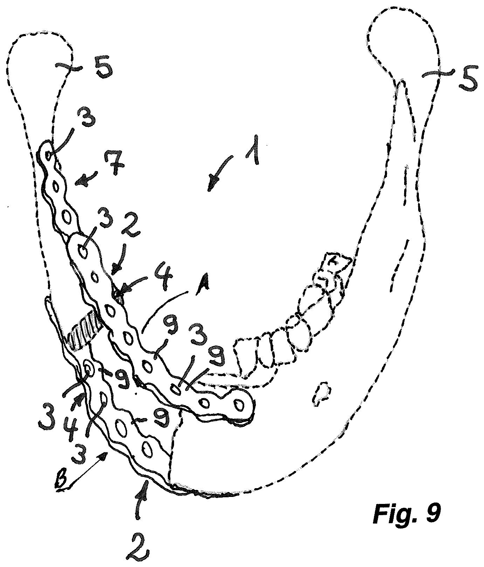

In Figur 9 ist gezeigt, dass die in den Figuren 7 und 8 separierten Teilstücke der innenliegenden ersten Lochleiste auch dazu verwendet werden können, um eine Lücke in der Zahnleiste und gegebenenfalls auch im darunter liegenden Kieferknochen dauerhaft zu überbrücken.

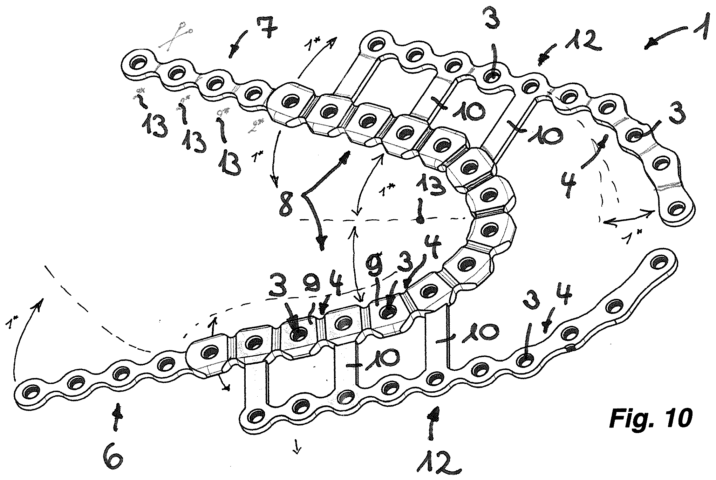

In Figur 10 ist durch gestrichelte Schnittlinien 13 verdeutlicht, dass sich das vorgefertigte Kieferimplantat 1 gemäß den Figuren 1 und 3 individuell ablängen und kürzen lässt. Durch gebogene Pfeile ist angedeutet, dass die Lochleisten 2, 11, 12 des in Figur 10 gezeigten Kieferimplantats insbesondere an den Querschnittsschwächungen 4 derart nachgebogen und verformt werden können, dass die Form dieses Kieferimplantats an die Gegebenheiten im Kiefer eines Patienten gut anpassbar ist.

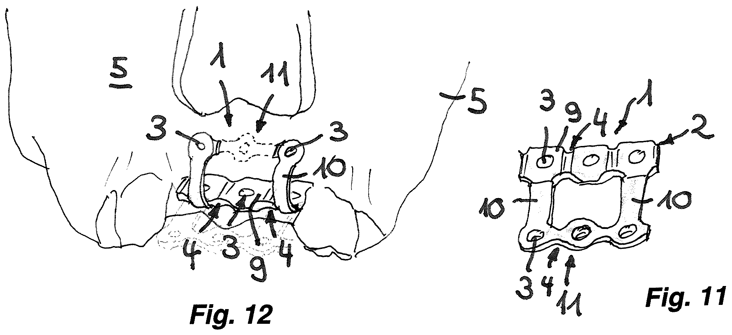

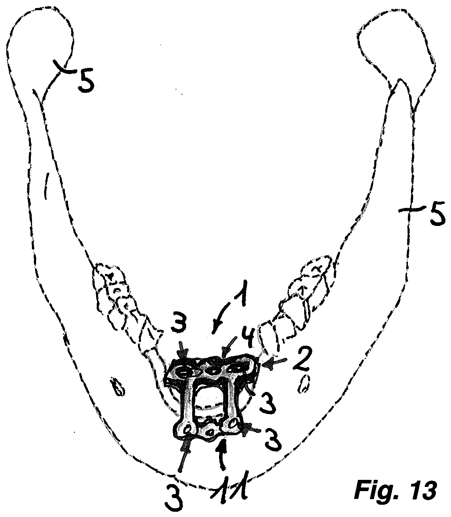

Aus einer zusammenschauenden Betrachtung der Figuren 11 bis 13 wird deutlich, dass ein aus dem vorgefertigten Kieferimplantat gemäß den Figuren 1 bis 3 ausgeschnittenes Teilstück der innenliegenden ersten Lochleiste 2 sowie einer der außenliegenden zweiten Lochleisten derart abgelängt und gebogen werden kann, dass dieses Teilstück des Kieferimplantats 1 eine Lücke im Kieferknochen und in der darüber liegenden Zahnleiste überbrückt. Die Lochleisten 2, 11, 12 des hier dargestellten Kieferimplantats lassen sich also leicht voneinander trennen, so dass auch nur Teilstücke des Kieferimplantats implantiert werden können. Dabei wird durch die gliederkettenförmige Außenkontur der Lochleisten 2, 11, 12 und durch die zwischen den Befestigungslöchern 3 vorgesehenen taillenförmigen Querschnittsschwächungen 4 Einschnürungen gebildet, an denen die Lochleisten 2, 11, 12 abgetrennt, abgelängt und/oder verformt werden können. Dabei lassen sich Teilstücke des vorgefertigten Kieferimplantats 1 in zahntragenden Bereichen als ausreichend stabile Retroplatte verwenden.

### Bezugszeichenliste

- 1: Kieferimplantat
- 2: innenliegende erste Lochleiste
- 3: Befestigungslöcher
- 4: Querschnittsschwächungen
- 5: Kiefer
- 6: freier Endbereich der innenliegenden ersten Lochleiste 2
- 7: freier Endbereich der innenliegenden ersten Lochleiste 2
- 8: mit Abstand von den freien Enden 6, 7 angeordneter (mittlerer) Teilbereich 8 der ersten Lochleiste 2
- 9: Querschnittsverdickungen
- 10: Verbindungsstege
- 11: außenliegende zweite Lochleiste
- 12: außenliegende zweite Lochleiste
- 13: Schnittlinien

## Patentansprüche

1. Kieferimplantat (1) mit einer ersten, etwa U-förmigen Lochleiste (2) und wenigstens einer zweiten Lochleiste (11, 12), die in Bezug auf die U-Form der ersten Lochleiste (2) außerhalb des Us liegt, wobei die erste Lochleiste (2) voneinander beabstandete Befestigungslöcher (3) trägt und zwischen benachbarten Befestigungslöchern (3) Querschnittsschwächungen (4) zum Ablängen der ersten Lochleiste (2) aufweist, wobei die erste Lochleiste (2) in einem Abstand von den freien Enden (6, 7) der ersten Lochleiste (2) einen Teilbereich (8) aufweist, in dem Befestigungslöcher (3) ein Innengewinde zum Befestigen eines Zahnersatzes aufweisen und in dem jedes dieser Befestigungslöcher (3) mit Innengewinde eine die Längserstreckung dieses Befestigungsloches (3) erhöhende Querschnittsverdickung (9) aufweist und wobei die zweite Lochleiste (11, 12) an einem Schenkel der U-Form der ersten Lochleiste über Verbindungsstege (10) mit der ersten Lochleiste (2) verbunden ist, wobei die Befestigungslöcher (3) der zweiten Lochleiste (11, 12) zur Aufnahme von Befestigungsschrauben ausgebildet sind und wobei die erste Lochleiste sockel-, zapfen- und hülsenfrei ausgebildet ist, wobei das Kieferimplantat (1) im Bereich seiner Verbindungsstege (10) derart verformbar ausgestaltet ist, dass die erste, innenliegende Lochleiste (2) auf einem Kieferkamm montierbar ist, während die wenigstens eine zweite, außenliegende Lochleiste (11, 12) an der benachbarten Außenflanke des Kieferkamms befestigbar ist.

2. Kieferimplantat nach Anspruch 1, **dadurch gekennzeichnet, dass** die erste und/oder die wenigstens eine zweite Lochleiste eine gliederkettenförmige Außenkontur mit jeweils einer im Bereich eines jeden Befestigungsloches (3) angeordneten, vorzugsweise gerundeten Ausformung sowie einer taillenförmigen und als Querschnittsschwächung (4) ausgebildeten Einformung zwischen benachbarten Befestigungslöchern (3) aufweist.

3. Kieferimplantat nach einem der vorangehenden Ansprüche, **dadurch gekennzeichnet, dass** die Querschnittsverdickung (9) eine unrunde Außenkontur aufweist.

4. Kieferimplantat nach einem der vorangehenden Ansprüche, **dadurch gekennzeichnet, dass** zumindest eine Querschnittsverdickung (9) als eine einseitig oder doppelseitig vorgesehene Materialverdickung der ersten Lochleiste (2) ausgestaltet ist, welche Materialverdickung (9) eine vorzugsweise kreissegmentförmige Außenkontur mit auf gegenüberliegenden Seiten zu benachbarten Querschnittsverdickungen (9) hin angeordneten Außenlinien oder Kreissehnen aufweist.

5. Kieferimplantat nach einem der vorangehenden Ansprüche, **dadurch gekennzeichnet, dass** die erste und/oder die wenigstens eine zweite Lochleiste in einem mittleren Bereich ihrer Längserstreckung einen reduzierten Leistenquerschnitt aufweist und in Richtung zu ihren freien Endbereichen einen demgegenüber verdickten oder vergrößerten Leistenquerschnitt hat.

6. Kieferimplantat nach einem der vorangehenden Ansprüche, **dadurch gekennzeichnet, dass** auch die an den freien Endbereichen (6, 7) der ersten Leiste (2) vorgesehenen und zur Befestigung der ersten Lochleiste (2) am Kiefer (5) bestimmten Befestigungslöcher (3) ein Innengewinde tragen.

7. Kieferimplantat nach einem der vorangehenden Ansprüche, **dadurch gekennzeichnet, dass** die wenigstens eine zweite Lochleiste (11, 12) an die Form der U-förmigen innenliegenden ersten Lochleiste (2) angepasst ist.

8. Kieferimplantat nach einem der vorangehenden Ansprüche, **dadurch gekennzeichnet, dass** das Kieferimplantat (1) im Bereich seiner Verbindungsstege (10) ablängbar und/oder verformbar ausgestaltet ist.

9. Kieferimplantat nach einem der vorangehenden Ansprüche, **dadurch gekennzeichnet, dass** das Kieferimplantat (1) zwei zweite Lochleisten (11, 12) aufweist, die in Bezug auf die U-Form der ersten Lochleiste (2) jeweils außerhalb des Us liegen und die jeweils an einem der Schenkel der U-Form der ersten Lochleiste (2) über Verbindungsstege (10) mit der ersten Lochleiste (2) verbunden sind.

10. Kieferimplantat nach einem der vorangehenden Ansprüche, **dadurch gekennzeichnet, dass** das Kieferimplantat (1) aus Metall oder einem vorzugsweise verstärkten und insbesondere faserverstärkten Kunststoff hergestellt ist.

## Claims

1. Jaw implant (1) having a first, approximately U-shaped perforated strip (2) and at least one second perforated strip (11, 12) which, in relation to the U-shape of the first perforated strip (2), lies outside the U, wherein the first perforated strip (2) carries spaced-apart fastening holes (3) and has cross-sectional weakened portions (4) between adjacent fastening holes for cutting the first perforated strip (2) to length, wherein the first perforated strip (2) has a partial region (8) at a distance from the free ends (6, 7) of the first perforated strip (2), in which fastening holes (3) have an internal thread for fastening a tooth replacement and in which each of these fastening holes (3) with internal thread has a cross-sectional thickened portion (9) which increases the longitudinal extension of this fastening hole (3) and wherein the second perforated strip (11, 12) is connected at a leg of the U-shape of the first perforated strip via connecting webs (10) to the first perforated strip (2), wherein the fastening holes (3) of the second perforated strip (11, 12) are designed to accommodate fastening screws and wherein the first perforated strip is designed without a base, pin, or sleeve, wherein the jaw implant (1) is designed to be deformable in the region of its connecting webs (10) in such a way that the first, inner perforated strip (2) can be mounted on a jaw ridge, while the at least one second, outer perforated strip (11, 12) can be fastened to the adjacent outer flank of the jaw ridge.

2. Jaw implant according to claim 1, **characterized in that** the first and/or the at least one second perforated strip has a link chain-shaped outer contour with in each case a preferably rounded formation arranged in the region of each fastening hole (3) and a waist-shaped indentation formed as a cross-sectional weakened portion (4) between adjacent fastening holes (3).

3. Jaw implant according to one of the preceding claims, **characterized in that** the cross-sectional thickened portion (9) has a non-circular outer contour.

4. Jaw implant according to one of the preceding claims, **characterized in that** at least one cross-sectional thickened portion (9) is designed as a material thickening provided on one or both sides of the first perforated strip (2), which material thickened portion (9) has a preferably circular segment-shaped outer contour with outer lines or circle chords arranged on opposite sides toward adjacent cross-sectional thickened portions (9).

5. Jaw implant according to one of the preceding claims, **characterized in that** the first and/or the at least one second perforated strip has a reduced strip cross-section in a central region of its longitudinal extension and has a thickened or enlarged strip cross-section relative thereto in the direction toward its free end regions.

6. Jaw implant according to one of the preceding claims, **characterized in that** the fastening holes (3) provided at the free end regions (6, 7) of the first strip (2) and intended for fastening the first perforated strip (2) to the jaw (5) also have an internal thread.

7. Jaw implant according to one of the preceding claims, **characterized in that** the at least one second perforated strip (11, 12) is adapted to the shape of the U-shaped inner first perforated strip (2).

8. Jaw implant according to one of the preceding claims, **characterized in that** the jaw implant (1) is designed to be cut to length and/or deformable in the region of its connecting webs (10).

9. Jaw implant according to one of the preceding claims, **characterized in that** the jaw implant (1) has two second perforated strips (11, 12) which, in relation to the U-shape of the first perforated strip (2), are each located outside the U and are each connected to the first perforated strip (2) via connecting webs (10) at one of the legs of the U-shape of the first perforated strip (2).

10. Jaw implant according to one of the preceding claims, **characterized in that** the jaw implant (1) is made of metal or a preferably reinforced and in particular fiber-reinforced plastic.

## Revendications

1. Implant de mâchoire (1) avec une première bande de trous (2) approximativement en forme de U et au moins une deuxième bande de trous (11, 12) qui se trouve à l'extérieur du U par rapport à la forme en U de la première bande de trous (2), la première bande de trous (2) portant des trous de fixation (3) espacés les uns des autres et présentant entre des trous de fixation (3) adjacents des faiblesses en coupe transversale (4) pour la mise à longueur de la première bande de trous (2), la première bande de trous (2) présentant, à une certaine distance des extrémités libres (6, 7) de la première bande de trous (2), une zone partielle (8) dans laquelle des trous de fixation (3) présentent un filetage interne pour la fixation d'une prothèse dentaire et dans laquelle chacun de ces trous de fixation (3) avec filetage interne présente un élargissement de section transversale (9) augmentant l'étendue longitudinale de ce trou de fixation (3) et la deuxième bande de trous (11, 12) est reliée à la première bande de trous (2) sur une branche de la forme en U de la première bande de trous par l'intermédiaire de barrettes de liaison (10), les trous de fixation (3) de la deuxième bande de trous (11, 12) étant réalisés pour recevoir des vis de fixation et la première bande de trous étant réalisée sans socle, sans tenon et sans douille, l'implant de mâchoire (1) étant conçu de manière déformable dans la zone de ses barrettes de liaison (10) de telle sorte que la première bande de trous (2) située à l'intérieur est apte à être montée sur une crête de la mâchoire, tandis qu'au moins une deuxième bande de trous (11, 12) située à l'extérieur est fixable sur le flanc extérieur adjacent de la crête de la mâchoire.

2. Implant de mâchoire selon la revendication 1, **caractérisé en ce que** la première et/ou l'au moins une deuxième bande de trous présente un contour extérieur en forme de chaîne articulée avec respectivement un bossage, de préférence arrondie, disposée dans la zone de chaque trou de fixation (3) ainsi qu'une cavité en forme de taille et réalisée sous forme de faiblesse en coupe transversale (4) entre des trous de fixation (3) adjacents.

3. Implant de mâchoire selon l'une des revendications précédentes, **caractérisé en ce que** l'élargissement de section transversale (9) présente un contour extérieur non rond.

4. Implant de mâchoire selon l'une des revendications précédentes, **caractérisé en ce qu'**au moins un élargissement de section transversale (9) est conçu comme un épaississement de matériau prévu d'un côté ou des deux côtés de la première bande de trous (2), lequel épaississement de matériau (9) présente un contour extérieur de préférence en forme de segment de cercle avec des lignes extérieures ou des cordes de cercle disposées sur des côtés opposés vers des élargissements de section transversale (9) adjacents.

5. Implant de mâchoire selon l'une des revendications précédentes, **caractérisé en ce que** la première et/ou l'au moins une deuxième bande de trous présente, dans une zone centrale de son étendue longitudinale, une section transversale de bande réduite et, en direction de ses zones d'extrémité libres, une section transversale de bande épaissie ou augmentée par rapport à celle-ci.

6. Implant de mâchoire selon l'une des revendications précédentes, **caractérisé en ce que** les trous de fixation (3) prévus sur les zones d'extrémité libres (6, 7) de la première bande (2) et destinés à la fixation de la première bande de trous (2) sur la mâchoire (5) portent également un filetage interne.

7. Implant de mâchoire selon l'une des revendications précédentes, **caractérisé en ce que** l'au moins une deuxième bande de trous (11, 12) est adaptée à la forme de la première bande de trous (2) intérieur en forme de U.

8. Implant de mâchoire selon l'une des revendications précédentes, **caractérisé en ce que** l'implant de mâchoire (1) est conçu pour être mise à longueur et/ou déformé dans la zone de ses barrettes de liaison (10).

9. Implant de mâchoire selon l'une des revendications précédentes, **caractérisé en ce que** l'implant de mâchoire (1) présente deux deuxièmes bandes de trous (11, 12) qui se trouvent chacune à l'extérieur du U par rapport à la forme en U de la première bande de trous (2) et qui sont reliées à la première bande de trous (2) respectivement sur l'un des branches de la forme en U de la première bande de trous (2) par l'intermédiaire de barrettes de liaison (10).

10. Implant de mâchoire selon l'une des revendications précédentes, **caractérisé en ce que** l'implant de mâchoire (1) est fabriqué en métal ou en une matière plastique de préférence renforcée et en particulier renforcée par des fibres.
